# EUROPÄISCHE PATENTSCHRIFT

(11) **EP 1 084 990 B1**
(45) Veröffentlichungstag und Bekanntmachung des Hinweises auf die Patenterteilung: **31.03.2004**
(21) Anmeldenummer: 00117408.5
(22) Anmeldetag: 11.08.2000
(51) Int. Cl.: C01B 3/32

(54) **Vorrichtung zum Erwärmen und/oder Umsetzen wenigstens eines Mediums**
Device for heating and/or converting at least one medium
Dispositif de chauffage et/ou de conversion d' au moins un milieu

(30) Priorität: 15.09.1999 DE 19944186
(43) Veröffentlichungstag der Anmeldung: 21.03.2001
(73) Patentinhaber: Ballard Power Systems AG, 73230 Kirchheim / Teck-Nabern (DE)
(72) Erfinder: Schüssler, Martin, Dr. rer. nat., 89073 Ulm (DE)
(74) Vertreter: Beyer, Andreas, Dr.

(56) Entgegenhaltungen:
- EP-A- 0 878 442
- EP-A- 0 974 392
- EP-A- 0 994 068
- US-A- 5 015 444
- PATENT ABSTRACTS OF JAPAN vol. 1995, no. 08, 29. September 1995 (1995-09-29) & JP 07 126001 A (AQUEOUS RES:KK), 16. Mai 1995 (1995-05-16)

## Beschreibung

Die vorliegende Erfindung betrifft eine Vorrichtung zum Erwärmen und/oder Umsetzen wenigstens eines Mediums nach dem Oberbegriff des Patentanspruchs 1.

Gaserzeugungssysteme für Brennstoffzellensysteme beinhalten verschiedene Komponenten, die auf verschiedenen Temperaturniveaus betrieben und in bestimmter Reihenfolge durchströmt werden. Die verschiedenen Komponenten weisen zum Teil eigene Dosiereinheiten auf. Die Komponenten sind entweder in eigenen Gehäusen oder durch Rohrleitungen verknüpft, oder zu Mehrfunktionseinheiten in einem Gehäuse gekoppelt.

In der US-5,015,444 ist ein Plattenreaktor zur Reformierung von Kohlenwasserstoffen gezeigt, welcher eine obere und eine untere Endplatte und dazwischen in Stapelbauweise angeordnete, Medienräume definierende Platten aufweist. Die aus massiven Metallblechen gebildeten Platten werden parallel zur Plattenebene überströmt. Der Katalysator ist in Form einer Schüttung oder Beschichtung eingebracht. Aus der JP-7-126001 ist eine Vorrichtung bekannt, bei der die wesentlichen Komponenten eines Gaserzeugungssystems zu einer kompakten Einheit zusammengefügt sind.

Aus der EP 0 906 890 A1 ist eine gattungsgemäße Vorrichtung zur Wasserstofferzeugung aus Kohlenwasserstoffen oder Alkohol unter Zuführung eines Kohlenwasserstoff oder Alkohol und Wasser umfassenden Reaktionsgemisches auf einen Katalysator bekannt. Der Katalysator ist hierbei durch Verpressen mindestens eines Katalysatorpulvers in eine einen Formkörper bildenden und stark komprimierte Schicht hergestellt, wobei das Reaktionsgemisch unter Druckabfall durch die Katalysatorschicht hindurchpressbar ist.

Weitere aus gepressten und vom Medium durchströmten Schichten aufgebaute Komponenten eines Gaserzeugungssystems sind aus der DE 197 20 294 C1 (Verdampfer/Reformer), DE 199 01 301.2 (Reformer/Gasreinigung, nicht vorveröffentlicht), DE 198 47 987.5 (Verfahren zur Herstellung solcher Schichten, nicht vorveröffentlicht), DE 198 32 625.4 (Herstellung eines Stapelkörpers, nicht vorveröffentlicht) bekannt.

Aus der DE 195 34 433 C1 ist schließlich eine gepresste Katalysatorschicht für einen Methanolreformierungsreaktor bekannt, die von dem zu reformierenden Medium überströmt wird. Die Katalysatorschicht wird durch eine verdichtete Metallschaum-Trägerschicht gebildet, in deren Poren das Katalysatormaterial fixiert ist. Die Schicht wird nach dem Einbringen des Katalysatormaterials zu dessen Fixierung noch verdichtet.

Die EP 0 878 442 A1 offenbart einen Reaktor für die Wasserdampfreformierung von Methanol. Der schichtförmig aufgebaute Reaktor umfasst eine von einer porösen, metallischen Matrix gebildete Verdampferschicht, die mit einer ebenfalls von einer porösen, metallischen Matrix gebildeten Katalysatorschicht verbunden ist. Die Verdampferschicht und die Katalysatorschicht grenzen unmittelbar aneinander an und können auch von einer einzigen, durchgehenden porösen Matrix gebildet sein.

Die US 5,015,444 betrifft einen zur Verwendung in Brennstoffzellensystemen vorgesehenen Reaktor für die Reformierung eines Treibstoffgases. Zwei Haupteinheiten des Reaktors umfassen jeweils einen mit einem Reformierungskatalysator gefüllten Reformierungsreaktor, einen mit einem Verbrennungskatalysator gefüllten Verbrennungsreaktor und eine zwischen dem Reformierungsreaktor und dem Verbrennungsreaktor angeordnete wärmeleitfähige Trennplatte. Die beiden Haupteinheiten des Reaktors sind durch eine Hilfseinheit voneinander getrennt. Die Hilfseinheit umfasst zwei hochporöse Dispersionsplatten sowie eine zwischen den Dispersionsplatten angeordnete und mit einem großflächigen Durchlass versehene Zwischenplatte und dient der gleichmäßigen Zufuhr des Treibstoffgases in die beiden zu der Hilfseinheit benachbarten Verbrennungsreaktoren.

Aus der JP 07 126001 A ist ein aus mehreren Abschnitten aufgebauter Reaktor bekannt, dessen einzelne Reaktorabschnitte unmittelbar aneinandergrenzen und aus mehreren, senkrecht zu den Grenzflächen zwischen den Reaktorabschnitten verlaufenden Schichten bestehen, wobei sich einzelne Schichten über mehrere Reaktorabschnitte erstrecken.

Die EP 0 974 392 A2 offenbart einen Stapelreaktor zur Wasserstofferzeugung aus Kohlenwasserstoffen. Der Reaktor besteht aus mehreren aufeinandergestapelten und zumindest in Teilbereichen miteinander verbundenen Katalysatorscheiben, wobei in von benachbarten Katalysatorscheiben gebildeten Hohlräumen ein Gitternetz oder ein von Metallblechen bedecktes Gitternetz zum Stützen der Hohlräume während des Sinterns des Reaktors angeordnet ist.

Insbesondere für mobile Anwendungen muss, um die Masse derartiger Systeme möglichst klein und die Kosten gleichzeitig gering zu halten, ein sehr hoher Integrationsgrad erreicht werden. Beim Einsatz einer solchen Anordnung sind die darin ablaufenden Reaktionen an enge Betriebstemperaturbereiche gekoppelt. Insbesondere beim Einsatz in mobilen Anwendungen, beispielsweise Fahrzeugen, welche Brennstoffzellensysteme zum Antrieb aufweisen, sind Temperaturschwankungen und vor allem auch Kaltstartbedingungen bei derartigen modularen Plattenaufbauten kritisch.

Aufgabe der Erfindung ist daher die Schaffung einer Vorrichtung zum Erwärmen und/oder Umsetzen wenigstens eines Mediums, bei welcher verschiedene Funktionsbereiche unter Schaffung eines möglichst hohen Integrationsgrades zusammengefasst und besonders energieeffizient betrieben werden können.

Diese Aufgabe wird gelöst durch eine Vorrichtung mit den Merkmalen des Patentanspruchs 1.

Durch die erfindungsgemäße Unterteilung des aus gepressten Schichten gebildeten Stapels in eine Anzahl von thermisch voneinander isolierten Funktionsbereichen ist ein hoher Integrationsgrad beispielsweise einer Vorrichtung zur Wasserstofferzeugung aus Methanol und Wasser erreichbar. Es ist hierbei beispielsweise möglich, einen Verdampfer und einen katalytischen Reaktor, welcher seinerseits in verschiedene Stufen unterteilt sein kann, innerhalb eines Plattenstapels zu realisieren.

Eine niedrige Gesamtmasse des heißen Reaktionsbereiches verringert die zum Kaltstart notwendige Wärmeeinbringung. Zudem erleichtert eine kompakte Ausformung des heißen Reaktionsbereiches die thermische Isolierung.

Vorteilhafte Ausgestaltungen der erfindungsgemäßen Vorrichtung sind Gegenstand der Unteransprüche.

Gemäß einer ersten bevorzugten Ausführungsform der erfindungsgemäßen Vorrichtung weist diese Isolierplatten auf, welche die Schichten in thermisch im wesentlichen voneinander isolierte Funktionsbereiche unterteilen. Durch die Anordnung von Isolierplatten zwischen den einzelnen, in Stapelbauweise angeordneten Schichten lassen sich in einfacher Weise einzelne, thermisch voneinander isolierte Funktionsbereiche, in welchen beispielsweise unterschiedliche Temperaturen herrschen, definieren. Diese Maßnahme ist sehr kostengünstig realisierbar.

Zweckmäßigerweise sind die Schichten zwischen einer unteren und einer oberen Endplatte angeordnet. Hierdurch ist die mechanische Stabilität der erfindungsgemäßen Vorrichtung günstig beeinflusst.

Gemäß einer weiteren bevorzugten Ausführungsform der erfindungsgemäßen Vorrichtung erstrecken sich die Isolierplatten im wesentlichen parallel zu den reaktiven Schichten der Vorrichtung. Durch diese Maßnahme ist es in einfacher Weise möglich, in einer Strömungsrichtung eines zu reagierenden Mediums Bereiche unterschiedlicher Funktionalität zu definieren.

Zweckmäßigerweise sind zwischen den Endplatten der Vorrichtung und den diesen jeweils benachbarten Schichten Isolatoren vorgesehen. Hierdurch kann gewährleistet werden, daß die Endplatten thermisch von den die Medienräume bildenden Platten entkoppelt werden können, so daß sich in den Medienräumen eine gewünschte Betriebstemperatur schneller einstellen kann. Bei Systemen, bei denen Bauteile mit hoher Wärmekapazität, etwa massive Endplatten aus Stahl, verbaut werden, und die zudem der mechanischen Stützung beim Einbau in eine zu betreibende Vorrichtung bedürfen, wird so der Einfluß der unvermeidbaren thermischen Ankopplung an die mechanischen Stützen verringert.

Vorteilhafterweise sind die Endplatten aus Aluminium hergestellt. Derartige Endplatten weisen bei geringem Gewicht gute mechanische Stabilität auf, solange sie eine wesentlich niedrigere Temperatur als die in der wasserstofffreisetzenden Zone ausweisen.

Gemäß einer weiteren bevorzugten Ausbildung der erfindungsgemäßen Vorrichtung weist diese Mittel zum Einspannen der Schichten zwischen den beiden Endplatten auf. Durch Einspannen der Schichten zwischen den beiden Endplatten ist ein einfacher und gleichzeitig stabiler Aufbau der erfindungsgemäßen Vorrichtung gewährleistet. Mit dieser Maßnahme ist ferner eine gute Dichtwirkung erzielbar, wenn beispielsweise zwischen den einzelnen Schichten Dichtungen vorgesehen sind. Durch die Mittel zum Einspannen der Schichten zwischen den Endplatten kann eine Preßkraft auf die Dichtungen aufgebracht werden.

Zweckmäßigerweise sind die Mittel zum Einspannen der Schichten als Zuganker, Zugbänder oder ähnliches ausgebildet. Derartige Zuganker sind preiswert verfügbar und erweisen sich in der Praxis als robust und zuverlässig.

Vorteilhafterweise sind die Randbereiche der Schichten gegenüber der Umgebung abgedichtet ausgebildet. Hierdurch kann vermieden werden, daß beispielsweise Reaktionsprodukte in die Umgebungsluft abgegeben werden, wodurch der mit der erfindungsgemäßen Vorrichtung erzielbare Wirkungsgrad vermindert wäre. Die Abdichtung der Schichtränder kann beispielsweise durch Löten oder Metallspritzen, oder auch durch Verwendung anderer Materialien erfolgen.

Es erweist sich ferner als zweckmäßig, Funktionsbereiche hoher Temperatur im Inneren des Stapels auszubilden. Durch diese Maßnahme können derartige Bereiche optimal thermisch isoliert werden.

Es erweist sich ferner als zweckmäßig, daß eine den gesamten Stapel umgebende Isolierung vorgesehen ist. Mit einer derartigen Maßnahme sind geringe Wärmeverluste und daher hohe Wirkungsgrade erzielbar.

Es erweist sich als vorteilhaft, die Endplatten und die Mittel zum Einspannen der Schichten außerhalb des thermisch isolierten Bereiches vorzusehen.

Gemäß einer besonders bevorzugten Ausführungsform der erfindungsgemäßen Vorrichtung sind durch wenigstens einen Teil der Schichten verlaufende Eduktkanäle, über welche einzelne Funktionsbereiche selektiv mit jeweiligen Edukten beaufschlagbar sind, und/oder durch wenigstens einen Teil der Schichten verlaufende Verbindungskanäle, über welche Edukte oder Produkte von wenigstens einem ersten in wenigstens einen zweiten Funktionsbereich übertragbar sind, und/oder Produktkanäle, über welche in den einzelnen Funktionsbereichen erwärmte oder entstandene Edukte bzw. Reaktionsprodukte aus den jeweiligen Funktionsbereichen abführbar sind, vorgesehen. Durch eine derartige selektive Beaufschlagung lassen sich in einfacher Weise Funktionsbereiche definieren. Es läßt sich hiermit ein besonders hoher Integrationsgrad erreichen. Als besonders vorteilhaft erweist sich die Kombination dieser Maßnahme mit der Ausbildung von Isolierplatten zur Schaffung von thermisch voneinander isolierten Funktionsbereichen. Es können beispielsweise mehrere gleichartige Funktionseinheiten innerhalb des Stapels vorgesehen sein, die thermisch isoliert voneinander sind. Es ist durch einen derartigen modularen Aufbau möglich (beispielsweise bei einem Kaltstart), nur einzelne Funktionsbereiche zu beaufschlagen, beispielsweise zu erwärmen oder warmzuhalten, und dennoch eine funktionsfähige Einheit zu gewährleisten.

Zweckmäßigerweise sind zur Beaufschlagung unterschiedlicher Funktionsbereiche mit einem gleichen Edukt unterschiedliche, selektiv mit den jeweiligen Funktionsbereichen kommunizierende Eduktkanäle, und/oder zur Abführung der Produkte aus den jeweiligen Funktionsbereichen unterschiedliche Produktkanäle vorgesehen. Derartige Kanäle können im wesentlichen parallel zueinander verlaufen, und durch entsprechende Ausbildung von Öffnungen nur mit bestimmten Funktionsbereichen kommunizieren.

Die Erfindung wird nun anhand der beigefügten Zeichnung weiter beschrieben. In dieser zeigt
- Fig. 1: eine bevorzugte Ausführungsform der erfindungsgemäßen Vorrichtung in schematischer seitlicher, teilweise geschnittener Ansicht,
- Fig. 2: eine schematische seitliche Ansicht einer weiteren bevorzugten Ausführungsform der erfindungsgemäßen Vorrichtung, und
- Fig. 3: in seitlicher schematischer Ansicht eine weitere bevorzugte Ausführungsform der erfindungsgemäßen Vorrichtung.

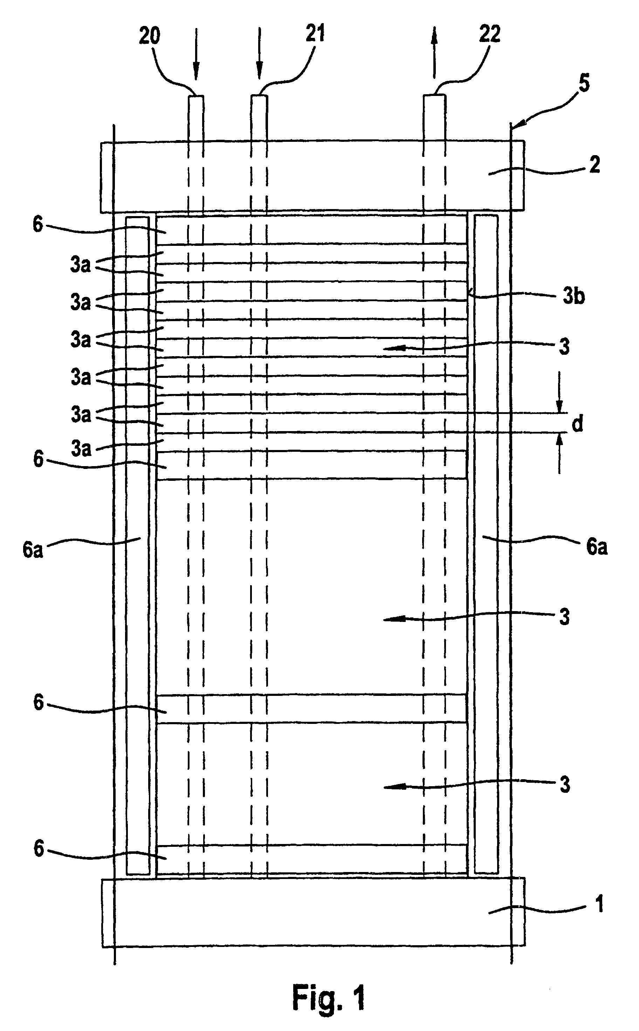

Eine erste bevorzugte Ausführungsform der erfindungsgemäßen Vorrichtung ist in Fig. 1 dargestellt. Man erkennt übereinander gestapelte, jeweilige Funktionseinheiten 3 bildende Schichten 3a (nur für den oberen Funktionsbereich im einzelnen eingezeichnet), welche durch Isolierplatten 6 voneinander getrennt sind. Die Isolierplatten 6 sowie die Schichten 3a sind zwischen einer unteren Endplatte 1 und einer oberen Endplatte 2 angeordnet und mittels eines (lediglich schematisch dargestellten) Zugankersystems 5 zwischen den beiden Endplatten 1, 2 eingespannt.

Die Schichten 3a bzw. die Funktionsbereiche 3 sind ferner seitlich mit einer weiteren Isolation 6a ausgebildet, so daß die Funktionsbereiche 3 durch die obere und untere Isolierplatte 6 sowie diese Isolation 6a im wesentlichen thermisch gegenüber der Umgebung isoliert sind.

Die einzelnen Schichten 3a sind durch Verpressen von Katalysatormaterial gebildet. Die einzelnen Schichten bilden Formkörper mit einer Dicke d, welche beispielsweise 1 mm beträgt. Als Katalysatormaterial wird ein feinkörniges Katalysatorpulver oder Katalysatorgranulat verwendet, dessen Körner einen Durchmesser von ca. 0,5 mm oder kleiner haben. Das Verpressen erfolgt beispielsweise bei Temperaturen von ca. 200° C bis 500° C.

Die Reaktionsbereiche sind über Eduktkanäle 20, 21 mit Edukten beaufschlagbar. Hierbei werden die Edukte in an sich bekannter Weise durch die Schichten 3a hindurchgepreßt, hierbei beispielsweise erwärmt und/oder reagiert und über einen Produktkanal 22 wieder abgeführt. Die Kanäle 20, 21, 22 sind derart ausbildbar, daß sie nur mit bestimmten Funktionseinheiten 3 kommunizieren. Der Aufbau und die Herstellung einer solcher Vorrichtung mit durchströmbaren Schichten 3a ist ausführlich in der EP 0 906 890 A1 beschrieben.

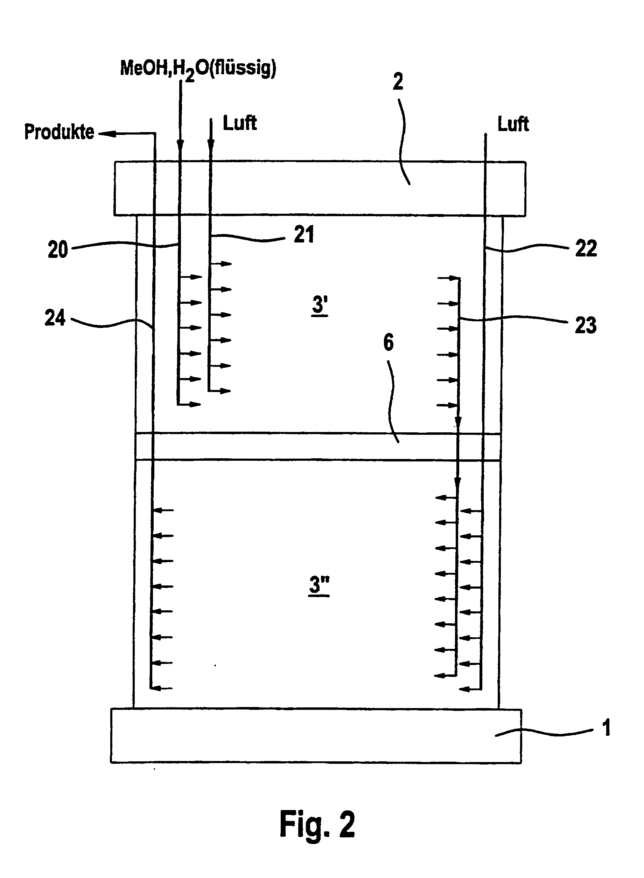

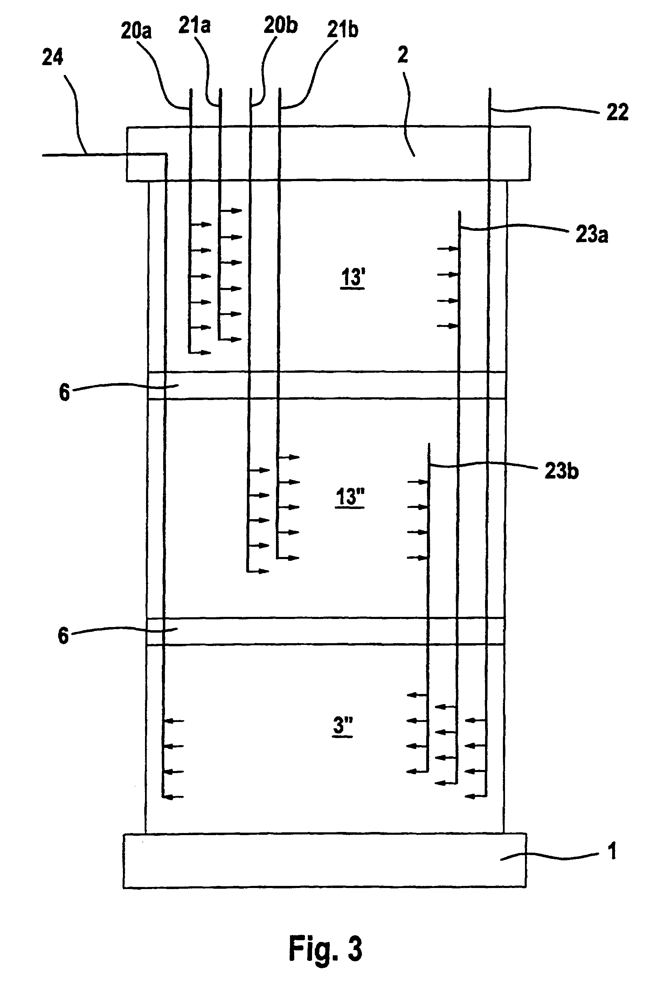

Es ist beispielsweise auch möglich, daß zugeführte Edukte in einem ersten Funktionsbereich 3 lediglich erwärmt bzw. verdampft werden, über einen inneren Kanal (in Figur 1 nicht dargestellt) in einen weiteren Funktionsbereich überführt werden, wo sie katalytisch zur Reaktion gebracht werden, wobei entstehende Produkte über den Produktkanal 22 wieder abgeführt werden. Dies soll anhand der Figuren 2 und 3 verdeutlicht werden, in denen schematisch derartige Kanalsysteme dargestellt sind.

Die Vorrichtung der Fig. 2 (welche beispielhaft zur Erzeugung von Wasserstoff aus einem Kohlenwasserstoff, insbesondere Methanol, und Wasser dienen soll) weist einen oberen Funktionsbereich 3' auf, welcher als Verdampfer ausgebildet ist, und einen unteren Reaktionsbereich 3'', welcher als Reaktor ausgebildet ist. Die beiden Reaktionsbereiche weisen hier nicht im einzelnen dargestellte Schichten 3a auf. Da der Verdampfer-Funktionsbereich 3' und der Reaktor-Funktionsbereich 3" unter unterschiedlichen thermischen Bedingungen eingesetzt werden müssen, ist, wie bereits erläutert, eine Isolierplatte 6 zwischen diesen beiden Funktionsbereichen vorgesehen.

Man erkennt, daß über eine erste Eduktleitung 20 ein flüssiges MeOH-H₂O-Gemisch, und über eine weitere Eduktleitung 21 Luft in den Verdampfer-Funktionsbereich 3' einbringbar sind. Die Eduktleitungen 20,21 kommunizieren lediglich mit dem Verdampfer-Funktionsbereich 3', wo das Methanol mit Hilfe der zugeführten Luft teilweise umgesetzt und die dabei entstehende Wärme zur Verdampfung der restlichen Medien verwendet wird.

Das in dem Verdampfer-Funktionsbereich verdampfte MeOH-H₂O-Gemisch ist über eine Zwischenleitung 23 von dem Verdampfer-Funktionsbereich 3' in den Reaktor-Funktionsbereich 3'' überführbar. Über eine weitere Eduktleitung 22 ist Frischluft in den Reaktor-Funktionsbereich 3'' einführbar. Man erkennt, daß die Eduktleitung 22 nicht mit dem Verdampfer-Funktionsbereich 3' kommuniziert. Das in dem Reaktor-Funktionsbereich 3'' durch partielle Oxidation oder autotherme Reformierung entstehende Reaktionsprodukt wird über eine Produktleitung 24, welche nicht mit dem Verdampfer-Funktionsbereich 3' kommuniziert, aus der dargestellten Vorrichtung abgeführt.

Eine weitere bevorzugte Ausführungsform der erfindungsgemäßen Vorrichtung wird nun anhand der Fig. 3 erläutert.

Die in Fig. 3 dargestellte Vorrichtung entspricht prinzipiell der Vorrichtung gemäß Fig. 2, wobei jedoch zwei thermisch voneinander isolierte Verdampfungsbereiche 13', 13'' vorgesehen sind. Die jeweiligen Verdampfungsbereiche 13', 13'' sind mit separaten, im wesentlichen parallel zueinander verlaufenden Eduktleitungen 20a, 21a bzw. 20b, 21b ausgebildet. Über jeweils separate Leitungen 23a bzw. 23b sind die Verdampfer-Funktionsbereiche 13' bzw.13'' mit dem Reaktor 3" verbunden.

Mit einer derartigen Ausgestaltung der erfindungsgemäßen Vorrichtung ist es möglich, beispielsweise nur einen der beiden Verdampfer-Funktionsbereiche mit Edukten zu beaufschlagen.

## Patentansprüche

1. Vorrichtung zum Erwärmen und/oder Umsetzen wenigstens eines Mediums, insbesondere Verdampfer, Reaktor und/oder Wärmetauscher, mit in Stapelbauweise zur Ausbildung eines Stapels angeordneten Schichten (3a), die durch Verpressen von Katalysatormaterial gebildet sind, wobei der Stapel durch Mittel (6, 21, 22, 23, 24) in eine Anzahl von Funktionsbereichen (3, 3', 3", 13', 13") unterteilt ist, **dadurch gekennzeichnet, dass** die Funktionsbereiche thermisch voneinander isoliert sind.

2. Vorrichtung nach Anspruch 1, **dadurch gekennzeichnet, dass** das wenigstens eine Medium unter Druckabfall durch die Schichten (3a) hindurchpreßbar ist und/oder die Schichten (3a) überströmt.

3. Vorrichtung nach Anspruch 1, **dadurch gekennzeichnet, dass** die thermisch voneinander isolierten Funktionsbereiche (3) durch Isolierplatten (6) voneinander getrennt sind.

4. Vorrichtung nach Anspruch 1, **dadurch gekennzeichnet, dass** die Schichten (3a) zwischen einer unteren Endplatte (1) und einer oberen Endplatte (2) angeordnet sind.

5. Vorrichtung nach einem der Ansprüche 3 oder 4, **gekennzeichnet durch** im wesentlichen sich parallel zu den Schichten (3a) erstreckende Isolierplatten (6).

6. Vorrichtung nach einem der Ansprüche 4 oder 5, **dadurch gekennzeichnet, dass** zwischen den Endplatten (1, 2) und den diesen jeweils benachbarten Schichten (3a) Isolierplatten (6) vorgesehen sind.

7. Vorrichtung nach einem der Ansprüche 4 bis 6, **dadurch gekennzeichnet, dass** die Endplatten (1, 2) aus Aluminium hergestellt sind.

8. Vorrichtung nach einem der Ansprüche 4 bis 7, **gekennzeichnet durch** Mittel (5) zum Einspannen der Schichten (3a) zwischen den beiden Endplatten (1, 2).

9. Vorrichtung nach Anspruch 8, **dadurch gekennzeichnet, daß** die Mittel (5) zum Einspannen durch Zuganker gebildet sind.

10. Vorrichtung nach einem der vorstehenden Ansprüche, **dadurch gekennzeichnet, daß** die Randbereiche (3b) der Schichten (3a) gegenüber der Umgebung abgedichtet ausgebildet sind.

11. Vorrichtung nach einem der vorstehenden Ansprüche, **dadurch gekennzeichnet, daß** Funktionsbereiche (3) hoher Temperatur im Inneren des Stapels ausgebildet sind.

12. Vorrichtung nach einem der vorstehenden Ansprüche, **gekennzeichnet durch** eine den Stapel seitlich umgebende Isolierung (6a).

13. Vorrichtung nach Anspruch 12, **dadurch gekennzeichnet, daß** die Endplatten (1,2) und die Mittel (5) zum Einspannen der Schichten (3a) außerhalb des durch die äußeren Isolierplatten (6) und die Isolierung (6a) definierten thermisch isolierten Bereiches vorgesehen sind.

14. Vorrichtung nach einem der vorstehenden Ansprüche, **gekennzeichnet durch** wenigstens **durch** einen Teil der Schichten verlaufende Eduktkanäle (20,21,22), über welche einzelne Funktionsbereiche (3, 3', 3'', 13', 13'') selektiv mit jeweiligen Edukten beaufschlagbar sind und/oder **durch** wenigstens einen Teil der Schichten verlaufende Verbindungskanäle (23), über welche Edukte oder Produkte von einem ersten Funktionsbereich in einen zweiten Funktionsbereich überführbar sind, und/oder **durch** wenigstens einen Teil der Schichten verlaufende Produktkanäle (24), über welche erwärmte Edukte bzw. Reaktionsprodukte aus den jeweiligen Funktionsbereichen abführbar sind.

15. Vorrichtung nach Anspruch 12, **dadurch gekennzeichnet, daß** zur Beaufschlagung unterschiedlicher Funktionsbereiche (3, 3', 3'', 13', 13'') mit einem gleichen Edukt unterschiedliche, selektiv mit den jeweiligen Funktionsbereichen kommunizierende Eduktkanäle, und zur Abführung der Produkte aus den jeweiligen Funktionsbereichen unterschiedliche Produktkanäle vorgesehen sind.

## Claims

1. Device for heating and/or converting at least one medium, in particular evaporator, reactor and/or heat exchanger, having layers (3a) which are arranged in a stacked structure so as to form a stack and are formed by pressing catalyst material, the stack being divided into a number of functional regions (3, 3', 3", 13', 13") by means (6, 21, 22, 23, 24) **characterized in that** the functional regions are thermally insulated from one another.

2. Device according to Claim 1, **characterized in that** the at least one medium flows over the layers (3a) and/or can be pressed through the layers (3a) with a drop in pressure.

3. Device according to Claim 1, **characterized in that** the functional regions (3) which are thermally insulated from one another are separated from one another by insulating plates (6).

4. Device according to Claim 1, **characterized in that** the layers (3a) are arranged between a lower end plate (1) and an upper end plate (2).

5. Device according to one of Claims 3 or 4, **characterized by** insulating plates (6) which extend substantially parallel to the layers (3a).

6. Device according to one of Claims 4 or 5, **characterized in that** insulating plates (6) are provided between the end plates (1, 2) and the layers (3a) which in each case adjoin the end plates.

7. Device according to one of Claims 4 to 6, **characterized in that** the end plates (1, 2) are made from aluminium.

8. Device according to one of Claims 4 to 7, **characterized by** means (5) for clamping the layers (3a) between the two end plates (1, 2).

9. Device according to Claim 8, **characterized in that** the clamping means (5) are formed by tie rods.

10. Device according to one of the preceding claims, **characterized in that** the edge regions (3b) of the layers (3a) are designed so as to be sealed off from the environment.

11. Device according to one of the preceding claims, **characterized in that** functional regions (3) which are at a high temperature are formed in the interior of the stack.

12. Device according to one of the preceding claims, **characterized by** an insulation (6a) which laterally surrounds the stack.

13. Device according to Claim 12, **characterized in that** the end plates (1, 2) and the means (5) for clamping in the layers (3a) are provided outside the thermally insulated region defined by the outer insulating plates (6) and the insulation (6a).

14. Device according to one of the preceding claims, **characterized by** starting-material passages (20, 21, 22), which run at least through some of the layers and via which individual functional regions (3, 3', 3", 13', 13") can be selectively acted on by respective starting materials, and/or connecting passages (23), which run through at least some of the layers and via which starting materials or products can be transferred from a first functional region into a second functional region, and/or product passages (24), which run through at least some of the layers and via which heated starting materials or reaction products can be discharged from the respective functional regions.

15. Device according to Claim 12, **characterized in that** different starting-material passages, which selectively communicate with the respective functional regions, are provided for the purpose of applying the same starting material to different functional regions (3, 3', 3", 13', 13"), and different product passages are provided for discharging the products from the corresponding functional regions.

## Revendications

1. Dispositif de chauffage et/ou de conversion d'au moins un milieu, en particulier un évaporateur, un réacteur et/ou un échangeur de chaleur, avec des couches (3a) disposées les unes au-dessus des autres de manière à former un empilement, lesquelles couches sont formées par pressage d'un matériau catalyseur, l'empilement étant divisé par des moyens (6, 21, 22, 23, 24) en un nombre de zones fonctionnelles (3, 3', 3", 13', 13"), **caractérisé en ce que** lesdites zones fonctionnelles sont thermiquement isolées les unes des autres.

2. Dispositif selon la revendication 1, **caractérisé en ce qu'**au moins un milieu peut traverser les couches (3a) sous l'effet d'une chute de pression et/ou parcourt les couches (3a).

3. Dispositif selon la revendication 1, **caractérisé en ce que** les zones fonctionnelles (3) thermiquement isolées les unes des autres sont séparées entre elles par des plaques isolantes (6).

4. Dispositif selon la revendication 1, **caractérisé en ce que** les couches (3a) sont disposées entre une plaque d'extrémité inférieure (1) et une plaque d'extrémité supérieure (2).

5. Dispositif selon l'une des revendications 3 ou 4, **caractérisé par** des plaques isolantes (6) s'étendant pour l'essentiel parallèlement par rapport aux couches (3a).

6. Dispositif selon l'une des revendications 4 ou 5, **caractérisé en ce que** des plaques isolantes (6) sont prévues entre les plaques d'extrémité (1, 2) et les couches (3a) respectivement voisines de celles-ci.

7. Dispositif selon l'une des revendications 4 à 6, **caractérisé en ce que** les plaques d'extrémité (1, 2) sont réalisées en aluminium.

8. Dispositif selon l'une des revendications 4 à 7, **caractérisé par** des moyens (5) destinés au serrage des couches (3a) entre les deux plaques d'extrémité (1, 2).

9. Dispositif selon la revendication 8, **caractérisé en ce que** les moyens (5) de serrage sont formés par des tirants.

10. Dispositif selon l'une des revendications précédentes, **caractérisé en ce que** les zones d'extrémité (3b) des couches (3a) sont formées de façon étanche par rapport à l'environnement.

11. Dispositif selon l'une des revendications précédentes, **caractérisé en ce que** des zones fonctionnelles (3) de haute température sont formées à l'intérieur de l'empilement.

12. Dispositif selon l'une des revendications précédentes, **caractérisé par** une isolation (6a) entourant latéralement l'empilement.

13. Dispositif selon la revendication 12, **caractérisé en ce que** les plaques d'extrémité (1, 2) et les moyens (5) destinés au serrage des couches (3a) sont prévus en dehors de la zone thermiquement isolée et définie par les plaques isolantes externes (6) et ladite isolation (6a).

14. Dispositif selon l'une des revendications précédentes, **caractérisé par** des canaux pour éduits (20, 21, 22) traversant au moins une partie des couches, via lesquels les éduits respectifs peuvent être amenés de manière sélective vers les différentes zones fonctionnelles (3, 3', 3", 13', 13"), et/ou par des canaux de transfert (23) traversant au moins une partie des couches, via lesquels les éduits ou les produits peuvent être transférés d'une première zone fonctionnelle vers une seconde zone fonctionnelle, et/ou par des canaux pour produits (24) traversant au moins une partie des couches, via lesquels les éduits chauffés et les produits de réaction peuvent être évacués des zones fonctionnelles respectives.

15. Dispositif selon la revendication 12, **caractérisé en ce que** différents canaux pour éduits communiquant de manière sélective avec les zones fonctionnelles respectives sont prévus pour alimenter avec un même éduit les différentes zones fonctionnelles (3, 3', 3", 13', 13"), et différents canaux pour produits sont prévus pour évacuer les produits des zones fonctionnelles respectives.
